# EUROPÄISCHE PATENTANMELDUNG

(11) **EP 2 363 531 A2**
(43) Veröffentlichungstag der Anmeldung: **07.09.2011**
(21) Anmeldenummer: 11001383.6
(22) Anmeldetag: 19.02.2011
(51) Int. Cl.: E01F 8/00

(54) **Mit Solarmodulen bestückte Lärmschutzwand**

(30) Priorität: 01.03.2010 DE 102010009698
(71) Anmelder: Apfelböck Ingenieurbüro GmbH, 94405 Landau a. d. Isar (DE)
(72) Erfinder: Apfelböck, Alois, 94405 Landau a.d. Isar (DE)
(74) Vertreter: Liebl, Thomas

(57) **Zusammenfassung**

Die Erfindung betrifft eine mit Solarmodulen (4) bestückte Lärmschutzwand (5), welche seitlich entlang einer Straße (1) oder eines Schienenweges verläuft, wobei die Solarmodule (4) funktionaler Bestandteil der Lärmschutzwand (5) sind und über diese insbesondere eine nach oben und/oder nach unten gerichtete Lärmabstrahlung bewirkt wird. Mit baulich geringem Aufwand erfährt die Lärmschutzwand (5) eine besonders hohe Effizienz dadurch, dass diese insgesamt gegenüber der Horizontalen geneigt und mit einem konstantem Neigungswinkel (α) verläuft, wobei die Solarmodule (4) mit gleichem Neigungswinkel (α) verlaufend weitgehend auf der gesamten, der Sonne zugewandten Lärmschutzwandoberfläche (9) montiert sind und sowohl eine äußere obere als auch eine innere untere Lärmschutzwandoberfläche (9, 10) schallreflektierend ausgebildet sind.

## Beschreibung

Die Erfindung bezieht sich auf eine mit Solarmodulen bestückte Lärmschutzwand, welche seitlich entlang einer Straße oder eines Schienenweges verläuft, wobei die Solarmodule funktionaler Bestandteil der Lärmschutzwand sind und über diese eine nach oben und/oder nach unten gerichtete Lärmabstrahlung bewirkt wird. Mittels der Lärmschutzwand ist zudem eine Trennung von verschiedenen Lärmquellen möglich.

Es ist bekannt, entlang von Verkehrswegen errichtete Lärmschutzwände zur photovoltaischen Stromerzeugung zu nutzen. Dabei sind bereits mannigfaltige Gestaltungsvarianten beschrieben worden:
So beschreibt beispielsweise die DE 196 02 653 C2 ein Schallschutzelement aus zwei oder mehreren aufeinander gelegten, lösbar miteinander verbundenen Kunststoffglasscheiben, zwischen denen photovoltaische Elemente lose eingelegt und durch die Verbindung der Scheiben fixiert sind.

In der DE 298 23 657 U1 sind Verbundsysteme aus Energiegewinnungselementen und einem funktionellen Träger beschrieben. Der Verbund kann zur Schallisolation oder Schallreduktion verwendet werden. Über die konstruktive Ausgestaltung zum Schallschutz schweigt sich dieses Dokument aus.

Die DE 20 2006 016 299 U1 beschreibt eine Schallschutzwand bzw. eine Einfriedungsplatte als Solar-Fertigmodul, so dass letztlich die gesamte Schallschutzwand weitgehend oder vollständig aus einem oder mehreren Solarkollektoren besteht.

Die DE 195 28 211 A1 beschreibt ein Photovoltaikmodul in Form eines Aufsatzes bzw. Deckels für absorbierende Lärmschutzelemente zum Zwecke einer Verbundkonstruktion. Das Photovoltaikmodul kann auf das Lärmschutzelement aufgesetzt und je nach Bauform des Lärmschutzelementes durch Einklipsen bzw. Anschrauben/Vernieten fixiert werden.

Bei einer mit photovoltaischen Solargeneratoren ausgerüsteten Lärmschutzwand nach der DE 39 40 023 A1 ist vorgesehen, dass die obenseitig auf der Lärmschutzwand und unter einem vorgegeben Winkel dazu montierten Solargeneratoren sich ohne Vorhandensein eines Überlappungsbereiches an die Lärmschutzwand anschließen.

Weiter geht aus der DE 196 01 095 A1 noch ein Lärmschutzbauwerk aus Betonfertigteilen hervor, wobei die dem Schallerzeuger zugewandte Oberfläche aus Beton mit einem hohen Absorptionsgrad besteht und zusätzlich Reihen photovoltaischer Elemente an und auf dem Fertigteil befestigt werden. Die Lärmschutzwand ist vertikal ausgerichtet, während die einzelnen photovoltaischen Elemente obenseitig und seitlich wegragend montiert sind und dadurch auch eine höhere Wirksamkeit der Schallschutzwand durch Abstrahlung des Schalls nach oben gegeben ist.

Herkömmlich sind in der Regel Lärmschutzwände bekannt, die eine Reihe lotrecht gesetzter Trägerpfosten aufweisen, an denen lärmdämmende Platten lotrecht montiert werden. Dabei werden die Platten entweder auf die Trägerpfosten montiert oder letztere sind als H-Profile ausgeführt, so dass die lärmdämmenden Platten von oben in die von den H-Profilen beidseits gebildeten Nuten eingeführt werden können. Grundsätzlich sollen derartige Lärmschutzwände zunächst funktional sein, das heißt eine möglichst gute Lärmdämmung sicherstellen. Darüber hinaus sollen sie sich möglichst ästhetisch in die Umgebung einfügen und oftmals werden auch Auflagen in Bezug auf die Materialwahl (Holz, Metall, Beton...) gemacht. Sichergestellt sein muss, dass die Lärmschutzwand statisch hinreichend stark ausgelegt ist, um beispielsweise Belastungen durch Wind und Schneelasten standhalten zu können.

Ausgehend von einer mit Solarmodulen bestückten Lärmschutzwand nach dem Oberbegriff des Patentanspruches 1 liegt der Erfindung die Aufgabe zugrunde, eine solche Lärmschutzwand dahingehend zu optimieren, dass bei möglichst geringem baulichen Aufwand sowohl die erforderlichen Schallschutzeigenschaften erfüllt werden als auch ein höchst möglicher energetischer Ertrag erzielt werden kann.

Diese Aufgabe wird gelöst mit den Merkmalen des Anspruchs 1. Vorteilhafte Weiterbildungen sind Gegenstand der Unteransprüche.

Gemäß Anspruch 1 ist eine mit Solarmodulen bestückte Lärmschutzwand vorgeschlagen, welche seitlich entlang einer Straße oder eines Schienenweges oder dergleichen verläuft, wobei die Solarmodule funktionaler Bestandteil der Lärmschutzwand sind und über diese eine nach oben gerichtete Lärmabstrahlung bewirkt wird. Erfindungsgemäß ist die Lärmschutzwand insgesamt und mit konstantem Neigungswinkel gegenüber der Horizontalen geneigt, wobei die Solarmodule mit gleichem Neigungswinkel verlaufend weitgehend auf einer gesamten, der Sonne zugewandten äußeren oberen Lärmschutzwandoberfläche montiert sind und wobei sowohl die äußere obere als auch eine innere untere Lärmschutzwandoberfläche schallreflektierend ausgebildet sind.

Die insgesamt geneigte und mit durchgängig konstantem Neigungswinkel verlaufende Lärmschutzwand ist relativ einfach herstellbar. In gleicher Weise wird dadurch auch die Montage von Solarmodulen vereinfacht und es müssen bezüglich der verwendeten Modul-Rastermaße keine Rücksichten auf Stufensprünge, Abkantungen oder dergleichen entlang der Lärmschutzwandoberfläche genommen werden. Eine beidseitig schallreflektierend ausgebildete Lärmschutzwandoberfläche hat auch den Vorteil, dass sie baugleich an beiden Seiten einer Straße oder eines Schienenweges verwendbar ist.

Von Vorteil ist es, wenn die Neigung der Lärmschutzwand in Abhängigkeit von ihrem Himmelsrichtung bezogenen Verlauf zwischen 30° und 70° zur Horizontalen geneigt ist. Dadurch kann, in Abhängigkeit von den Jahreszeiten und in weiterer Abhängigkeit von einer Ost-, West- oder Südausrichtung und dem damit einhergehenden jeweiligen Sonnenstand über das Gesamtjahr betrachtet ein Optimum an Energieausbeute erzielt werden.

Von Vorteil ist, wenn eine äußere obere Lärmschutzwandoberfläche glatt und eine innere untere Oberfläche strukturiert rau, das heißt nicht glatt, ausgeführt sind, zum Beispiel aus einem Holz oder dergleichen. Dadurch wird eine optimale Lärmreflexion nach oben und ein Brechen und Ableiten des Lärms nach unten in das Erdreich bewirkt.

Günstig ist es, die Lärmschutzwand insgesamt geschlossen zu halten und mit einem spezifischen Gesamtgewicht von etwa 12,5 kg/m² auszuführen. Alternativ kann die Lärmschutzwand mit Aussparungen versehen sein, welche von den Solarmodulen abgedeckt sein können. Dabei kann die Rückseite der Solarmodule im Aussparungsbereich eine nach unten gerichtete Lärmabstrahlung bewirken.

Beispielsweise kann die Lärmschutzwand aus einem Holz oder holzartigem Material, insbesondere aus einer Holzschalung mit bevorzugt mehreren Holzschalungsbrettern, aufgebaut sein. Bevorzugt kann die Dichte des Holzes 0,5 g/cm³ betragen. Besonders bevorzugt kann die Holzschalung eine Dicke von 25 mm aufweisen. Auf diese Weise ist die Lärmschutzwand kostengünstig und einfach herstellbar.

In einer besonders bevorzugten Ausführungsform kann die Lärmschutzwand wenigstens auf ihrer den Solarmodulen zugewandten Oberseite mit einer Schutzschicht, insbesondere mit einer wasser- und/oder feuchtigkeitsundurchlässigen Schutzschicht, versehen sein. Somit kann insbesondere bei Lärmschutzwänden mit zum Beispiel feuchtigkeits- bzw. witterungsanfälligen Materialien, wie zum Beispiel Holz, die Lebensdauer der Lärmschutzwände erhöht werden. Ein Wartungsaufwand der Lärmschutzwände kann so reduziert werden.

Ferner können die Solarmodule dann auch an der Schutzschicht selbst befestigt werden, so dass diese in einer vorteilhaften Doppelfunktion die Lärmschutzwand zum einen schützen und zum anderen zur Halterung der Solarmodule ermöglichen. Die Schutzschicht kann mit einer im Wesentlichen in Neigungsrichtung verlaufenden Kanalstruktur ausgebildet sein, insbesondere wenigstens bereichsweise ein Wellenprofil aufweisen. Dadurch kann beispielsweise Regenwasser einfach entlang der Kanalstruktur abgeleitet werden.

Besonders bevorzugt kann die Schutzschicht durch ein Trapezblech gebildet sein. Die abgeflachten Kuppen des Trapezbleches können vorteilhaft eine Anbindung des Trapezbleches an die Solarmodule und/oder an die Lärmschutzwand verbessern.

Eine insgesamt kostengünstige Ausführung der Lärmschutzwand ist dadurch erzielbar, dass eine Ständerbauweise mit auf Erdankern montierten Stützpfählen gewählt wird. Die Erdanker können mit entsprechenden Fundamenten, insbesondere mit Betonfundamenten, versehen sein. Die Fundamente können bevorzugt eine Höhe von 0,9 m aufweisen.

Je nach Energieanforderungen in der näheren oder weiteren Umgebung der Lärmschutzwand kann diese vorteilhaft alternativ oder kumulativ mit thermischen bzw. photovoltaischen Solarmodulen bestückt werden.

Den jeweiligen Solarmodulen werden dann zweckmäßigerweise Energieaufbereitungs- bzw. -verteilerstationen zur Energieversorgung nahegelegener Wohn- oder Gewerbegebiete zugeordnet, die beispielsweise in Zusammenhang mit photovoltaischen Solarmodulen mit entsprechenden Wechselrichtern, Transformatoren und gegebenenfalls Stromspeichereinheiten (Batterien) versehen werden können.

Die besondere Ausgestaltung der mit den Solarmodulen bestückten Lärmschutzwand erlaubt es in vorteilhafter Weise, dass diese baugleich, mit gleicher Neigung und übereinstimmender Ausrichtung auf beiden Seiten der Straße oder des Schienenweges montiert werden kann. Der Fußpunkt der Lärmschutzwand kann dabei unterhalb, beispielsweise 1,29 m unterhalb, dem Höhenniveau des nächstgelegenen Fahrbahnrands oder Schienenweges liegen. Auf diese Weise wird vorteilhaft erreicht, dass durch die Fundamente der Lärmschutzwand keine wesentlichen Schallreflexionen beigetragen werden, welche eine Lärmpegelerhöhung verursachen könnten. Bevorzugt kann die Lärmschutzwand eine Höhe von 6,6 m in Bezug auf die Straße oder den Schienenweg aufweisen.

Anhand einer Zeichnung wird ein Ausführungsbeispiel der Erfindung nachstehend näher erläutert. Es zeigen:
- Fig. 1: eine schematisierte Darstellung einer seitlich einer Straße angebrachten und mit Solarmodulen bestückten Lärmschutzwand;
- Fig. 2a,b: zu beiden Seiten einer Straße angeordnete, baugleiche und gleich ausgerichtete Lärmschutzwände; und
- Fig. 3: Ansicht der Lärmschutzwand der Fig. 1 im Bereich und in Richtung des Pfeils A.

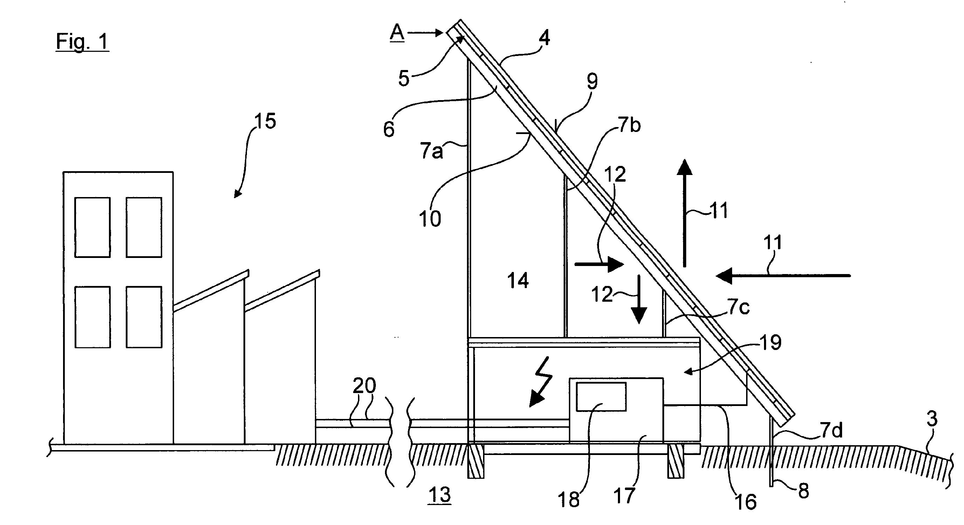

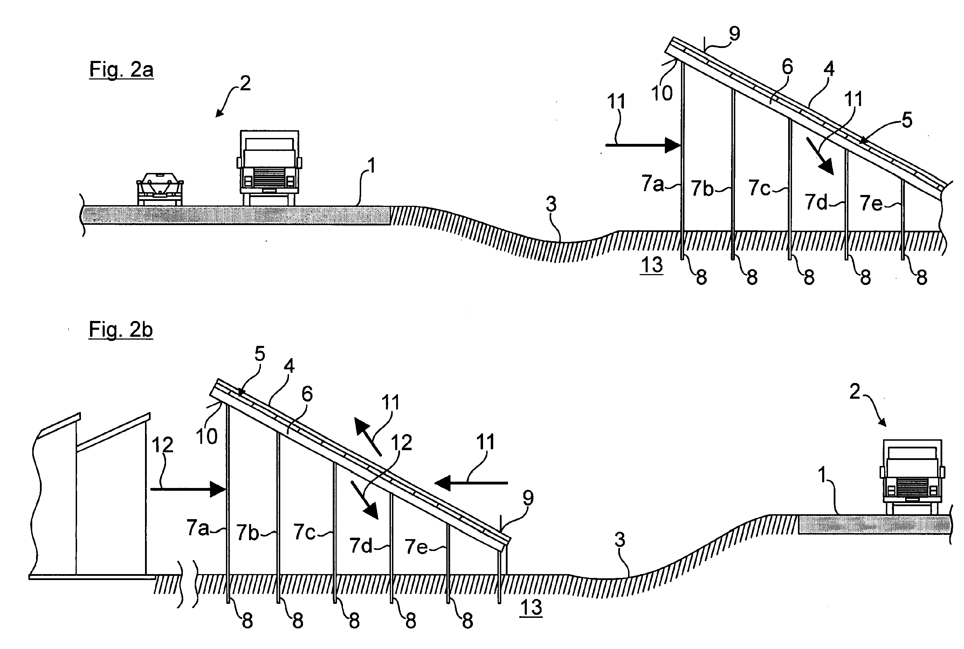

Wie sich aus der Zusammenschau der Fig. 1, 2a und 2b ergibt, ist seitlich einer Straße 1 mit entsprechendem Verkehrsaufkommen 2 und an eine sich daran anschließende Mulde 3 zur Aufnahme von evtuell anfallendem Regenwasser usw. angrenzend eine mit Solarmodulen 4 bestückte und bevorzugt durch eine Holzschalung aus zum Beispiel mehreren Holzschalungsbrettern gebildete Lärmschutzwand 5 angeordnet. Diese Lärmschutzwand 5 verläuft entlang der Straße 1 (wobei es sich auch um einen Schienenweg handeln könnte), und ihre vorteilhaft gewählte Neigung (Neigungswinkel α) zur Horizontalen ist bevorzugt in Bereichen zwischen α = 30° - 70° zu wählen, wobei die zu wählende Neigung insbesondere auch davon abhängt, welcher Himmelsrichtung die Solarmodule 4 zugewandt sind. Optimal ist natürlich eine reine Südausrichtung, aber auch eine reine Ost- oder Westausrichtung hat in der Regel zum Beispiel bei einem Neigungswinkel α= 30° nur eine Wirkungsgradverschlechterung in der Größenordnung von 15 % zur Folge.

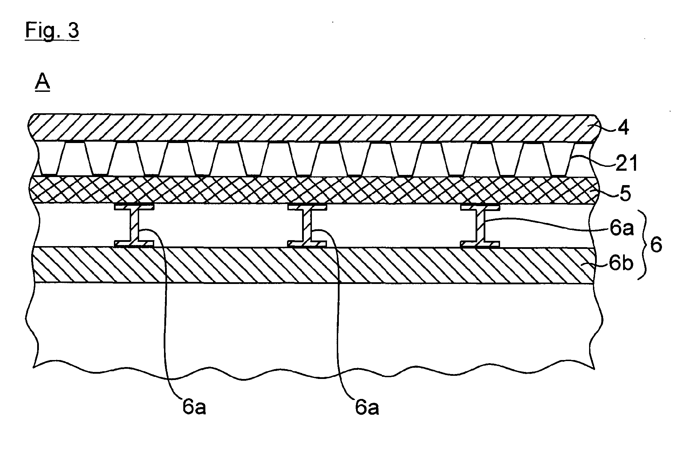

Die Lärmschutzwand 5 weist bevorzugt eine insgesamt geschlossene Wandfläche auf, wobei ihr spezifisches Gesamtgewicht in etwa 12,5 kg/m² betragen sollte. Bevorzugt besteht die Lärmschutzwand 5 aus einzelnen Platten, die von in gewissen Abständen angeordneten Trägern 6 bzw. einem Trägerverbund aus Längs- und Querträgern (siehe zum Beispiel die nachfolgend noch beschriebene Ausgestaltung nach Fig. 3) aufgenommen werden. Letztere wiederum werden von Stützpfählen 7a - 7f getragen, die sich auf mit entsprechenden Fundamenten versehenen Erdankern 8 abstützen.

Die Rastermaße (Länge, Breite) der Solarmodule 4 sind so gewählt, dass letztendlich die gesamte Lärmschutzwand 5 mit Solarmodulen 4 bedeckt ist, wobei letztere über Haken, Klammern, Schraubverbindungen auf der Lärmschutzwand 5 befestigt werden, so dass sie mit gleichem Neigungswinkel α wie diese verlaufen.

Wie aus der eine besonders bevorzugte Ausgestaltung zeigenden Fig. 3 hervorgeht, ist zwischen der Lärmschutzwand 5 und den Solarmodulen 4 ein Trapezblech 21 als weiterer Bestandteil der Lärmschutzwand 5 angeordnet, welches zum einen als Witterungs- bzw. Regenschutz für die Lärmschutzwand 5 und zum anderen in einer vorteilhaften Doppelfunktion zur Fixierung bzw. Festlegung der Solarmodule 4 dient. Diese Verwendung einer durch das Trapezblech 21 gebildeten Regenschutzschicht ist insbesondere dann von Vorteil, wenn die Lärmschutzwand 5 selbst aus einem vor Regen, Schnee oder dergleichen schützenswerten Material besteht, zum Beispiel aus einem Holz oder einem holzartigen Material. Die Trapezblechtäler sind dabei in Neigungsrichtung der Wand von oben nach unten verlaufend ausgebildet, so dass Wasser einfach über diese Kanalstruktur nach unten ablaufen kann. Die abgeflachten Kuppen des Trapezblechs 21 ermöglichen dabei eine in der Fig. 3 gezeigte flächige Anlage an zum einem der Lärmschutzwand 5 und zum anderen eine einfache Festlegung der Solarmodule 4, was hier aber lediglich äußerst schematisch gezeigt ist.

Ferner ist in Fig. 3 beispielhaft gezeigt, dass die hier lediglich beispielhaft zweiteilig ausgebildete Lärmschutzwand 5 auf einem Trägerverbund aus Längs- bzw. Nebenträgern 6 a abgestützt ist, welche wiederum auf einem Quer- bzw.Haupträger 6 b als weiteren Bestandteil des Trägerverbundes abgestützt sind. In einer hier nicht dargestellten, alternativen Ausführungsform können die Solarmodule 6 aber auch unmittelbar, das heißt ohne das Trapezblech 21, auf der Lärmschutzwand 5 befestigt sein.

Auf Grund der baulichen Eigenschaften der Solarmodule 4 ist eine von diesen im Wesentlichen gebildete äußere obere Lärmschutzwandoberfläche 9 glatt, vorzugsweise sogar verspiegelt, während eine innere, untere Lärmschutzwandoberfläche 10 im Wesentlichen strukturiert oder rau ausgebildet ist. In jedem Falle besitzen beide Oberflächen 9,10 insoweit ausreichende Reflektionseigenschaften, dass auf sie auftreffender Schall/Lärm 11, 12 nach oben bzw. in das gegebenenfalls mit Pflanzenbewuchs versehene Erdreich 13 abgeleitet wird.

Im Bereich der Lärmschutzwand 5 ist eine Energieaufbereitungs- und -verteilerstation 14 angeordnet, die mit entsprechenden Gerätschaften bestückt ist, um die von den Solarmodulen 4 gewonnene Energie an mehr oder weniger nahegelegene Verbraucher in einem Wohn- oder Industriegebiet 15 oder aber auch in ein entsprechendes öffentliches Netz einspeisen zu können.

So kann beispielsweise je nach der gegebenen Verbraucherstruktur im näheren oder weiteren Umfeld der Lärmschutzwand 5 vorgesehen werden, dass entweder thermische oder photovoltaische Solarmodule 4 angebracht werden. Denkbar ist aber auch, dass beide Arten von Solarmodulen 4 gleichzeitig zum Einsatz kommen.

Ist die Lärmschutzwand 5 beispielsweise mit photovoltaischen Solarmodulen 4 bestückt, so wird der von diesen erzeugte Gleichstrom über Leitung 16 an eine aus Energiespeicher 17 (Batterie) und Wechselrichter 18 bestehende Einheit 19 geleitet, um von dort, entsprechend aufbereitet, über geeignete Verzweigungsleitungen 20 den Verbrauchern im Wohn- bzw. Industriegebiet 15 zugeführt zu werden.

Wie insbesondere aus den Fig. 2a und 2b (Station 14 nicht dargestellt) ersichtlich wird, kann vorteilhaft zu beiden Seiten der Straße 1 mit gleichem Verlauf und gleicher Ausrichtung (Neigungswinkel α) eine mit Solarmodulen 4 bestückte Lärmschutzwand 5 vorgesehen werden. Dadurch lässt sich sowohl vom Verkehrsaufkommen 2 als auch vom Wohn- bzw. Industriegebiet 15 ausgehender Lärm 11, 12 nach oben bzw. ins Erdreich 13 ableiten.

## Patentansprüche

1. Mit Solarmodulen bestückte Lärmschutzwand, welche seitlich entlang einer Straße oder eines Schienenweges verläuft, wobei die Solarmodule funktionaler Bestandteil der Lärmschutzwand sind und über diese eine nach oben und/oder nach unten gerichtete Lärmabstrahlung bewirkt wird,
**dadurch gekennzeichnet,**
**dass** die Lärmschutzwand (5) insgesamt und mit konstantem Neigungswinkel (α) gegenüber der Horizontalen geneigt ist,
**dass** die Solarmodule (4) mit gleichem Neigungswinkel (α) verlaufend weitgehend auf einer gesamten, der Sonne zugewandten äußeren oberen Lärmschutzwandoberfläche (9) montiert sind,
und **dass** sowohl die äußere obere als auch eine innere untere Lärmschutzwandoberfläche (9, 10) schallreflektierend ausgebildet sind.

2. Lärmschutzwand nach Anspruch 1, **dadurch gekennzeichnet, dass** der Neigungswinkel (α) der Lärmschutzwand (5) in Abhängigkeit von ihrem Himmelsrichtung bezogenen Verlauf zwischen 30° und 70° gegenüber der Horizontalen beträgt.

3. Lärmschutzwand nach Anspruch 1 oder 2, **dadurch gekennzeichnet, dass** die äußere obere Lärmschutzwandoberfläche (9) glatt, vorzugsweise verspiegelt, und die innere untere Lärmschutzwandoberfläche (10) strukturiert rau ausgeführt sind.

4. Lärmschutzwand nach einem der Ansprüche 1 bis 3, **gekennzeichnet durch** eine insgesamt geschlossene Wandfläche mit einem spezifischen Gesamtgewicht von in etwa 12,5 kg/m².

5. Lärmschutzwand nach einem der Ansprüche 1 bis 4, **dadurch gekennzeichnet, dass** diese in Ständerbauweise mit auf Erdankern (8) montierten Stützpfählen (7a bis 7f) ausgeführt ist.

6. Lärmschutzwand nach einem der Ansprüche 1 bis 5, **dadurch gekennzeichnet, dass** diese alternativ oder kumulativ mit thermischen bzw. photovoltaischen Solarmodulen (4) bestückt ist.

7. Lärmschutzwand nach Anspruch 6, **dadurch gekennzeichnet, dass** den photovoltaischen Solarmodulen (4), nahe der Lärmschutzwand (5) angeordnet, eine mit Wechselrichter (18) und Energiespeicher (17) versehene Energieaufbereitungs- bzw. -verteilerstation (14), insbesondere zur Energieversorgung nahegelegener Wohn- oder Industriegebiete zugeordnet ist.

8. Lärmschutzwand nach Anspruch 6 oder 7, **dadurch gekennzeichnet, dass** den thermischen Solarmodulen (4) eine Verteilerstation zur Weiterleitung der gewonnenen thermischen Energie zugeordnet ist.

9. Lärmschutzwand nach einem der Ansprüche 1 bis 8, **dadurch gekennzeichnet, dass** auf beiden Seiten der Straße (1) oder des Schienenweges mit gleicher Neigung (Neigungswinkel α) und gleicher Ausrichtung bzw. Anordnung der Solarmodule (4) versehene Lärmschutzwände (5) vorhanden sind.

10. Lärmschutzwand nach einem der Ansprüche 1 bis 9, **dadurch gekennzeichnet, dass** die Lärmschutzwand (5) wenigstens auf ihrer den Solarmodulen (4) zugewandten Oberseite mit einer Schutzschicht (21), insbesondere mit einer wasser- und/oder feuchtigkeitsundurchlässigen Schutzschicht, versehen ist.

11. Lärmschutzwand nach Anspruch 10, **dadurch gekennzeichnet, dass** die Solarmodule (4) an der Schutzschicht (21) befestigt sind.

12. Lärmschutzwand nach Anspruch 10 oder 11, **dadurch gekennzeichnet, dass** die Schutzschicht (21) mit einer im Wesentlichen in Neigungsrichtung verlaufenden Kanalstruktur ausgebildet ist, insbesondere wenigstens bereichsweise ein Wellenprofil aufweist.

13. Lärmschutzwand nach einem der Ansprüche 10 bis 12, **dadurch gekennzeichnet, dass** die Schutzschicht (21) durch ein Trapezblech gebildet ist.

14. Lärmschutzwand nach einem der Ansprüche 1 bis 13, **dadurch gekennzeichnet, dass** die Lärmschutzwand (5) aus einem Holz oder holzartigem Material, insbesondere aus einer Holzschalung mit bevorzugt mehreren Holzschalungsbrettern, aufgebaut ist.
